# EUROPEAN PATENT APPLICATION

(11) **EP 0 924 022 A2**
(43) Date of publication of application: **23.06.1999**
(21) Application number: 98124192.0
(22) Date of filing: 21.12.1998
(51) Int. Cl.: B23K 26/00

(54) **Terminal group for laser beam devices, in particular for cutting metal sheets**

(30) Priority: 22.12.1997 IT BO970729
(71) Applicant: Esse. A. S.a.s. di Achiluzzi Stefano & C., 40037-Sasso Marconi (Bologna) (IT)
(72) Inventor: Achiluzzi, Stefano, 40036 Monzuno (IT)
(74) Representative: Dall'Olio, Giancarlo

(57) **Abstract**

A terminal group (K) for laser beam devices is disclosed, in particular for cutting metal sheets, which includes a support (7a) which holds a nozzle carrier (7), a focusing group (5) situated behind the nozzle carrier (7), washing gas ejection means (20) opening in front of said focusing group (5), and a nozzle (6) fastened to the nozzle carrier (7). The terminal group (K) includes also a frusto-conical insert (8) which reduces the section through which solid or gas particles pass when they are produced by the laser beam (2) hitting the metal sheet (10) and projected toward the second focusing group (5).

## Description

The present invention relates to a terminal groups for laser beam devices, in particular for cutting metal sheet, especially of highly reflective material, like e.g. aluminium.

It is known that in last years, the metallic materials processing, as well as medical field and other similar fields, have fully used the benefits of innovative technologies based on the use of ultrasounds, X-rays, and laser beams.

The most common industrial processing includes drilling, welding and especially cutting of metal sheets, which is also the subject of the present invention.

Continuous expansion of laser based technologies has stimulated the construction of more and more sophisticated devices aimed at improving this processing.

The laser devices employed in industrial field produce a beam of perfectly parallel and very intense luminous rays, which are in step with one another (coherent light).

The beam of rays can be suitably concentrated in a very reduced focus spot, so as to generate therein such a heat power as to cause local melting and evaporation of small metallic masses for every pulse.

For metal materials, the heat power necessary to provoke local evaporation is a function of the "evaporation heat" parameter.

However, if in the metal material local melting mostly occurs, the processing needs a heat power lower than in the previous case. However, a jet of washing gas is needed for the treated area.

The traditional devices for cutting metal sheets include a laser source which is capable of emitting, in the visible or ultraviolet range, a radiation beam of a determined length, frequency and specific power.

This beam is suitably reflected, by a mirror apparatus, until it is conveyed to a focusing lens.

Generally, this focusing lens is situated inside an axially symmetric group including a nozzle coupled to a suitable nozzle carrier.

In front of this lens, the focused laser ray, coaxial with the above described group, is concentrated on a spot of the metal sheet, causing therein localised melting.

This group has not only to stand the heating action from the laser beam, but also it is struck by a gas flow, which removes the solid and gaseous wastes produced during the processing and cools the working area of the tools.

The most important disadvantage of such processing, especially for cutting metal sheets, lies in soiling and consequent damaging of the focusing lens, in particular when highly reflective metallic masses are produced, due to the above mentioned processing wastes.

Since the lens is one of the most expensive elements of the device, the frequent damaging thereof considerably influence the global cost of the finished product.

The main object of the present invention is to propose a terminal group for laser devices, which can considerably reduce the soiling, and consequent damaging of the focusing lens, or focusing optical group, so as to diminish the replacement necessity for keeping good processing efficiency and high standard operative performance.

Another object of the present invention is to propose a terminal group for laser devices obtained according to a simple technical solution, and which is extremely functional and reliable, cheap and such as to not cause negative effects on the production process.

The above mentioned objects are obtained in accordance with the contents of the claims.

The characteristic features of the invention will be pointed out in the following description of the preferred, with reference to the enclosed drawings, in which:
- Figure 1 shows a schematic view of a structural diagram of the device, to which the proposed terminal group is mounted;
- Figures 2, 3, 4, 5 show other embodiments of this terminal group.

With reference to the above mentioned figures, numeral 1 indicates a source of laser rays, capable of emitting a laser beam 2, which, suitably directed by a conveying section 3, crosses first a first optical focusing group 4, then a terminal group K, and eventually strikes a metal sheet 10, situated substantially perpendicular to the first optical focusing group 4.

The terminal group K includes a nozzle carrier 7, made of e.g. metal or ceramic material, whose lower part is coupled, by e.g. threading 67a, with a nozzle 6. The nozzle 6 is screwed until the nozzle carrier 7 abuts against a first shoulder 67b, made in the external surface of the nozzle 6.

The upper part of the nozzle carrier 7 is coupled with a support 7a.

The above mentioned terminal group K features, made therein, an axial through hole 66, inside which a frusto-conical insert 8 is disposed.

The insert 8 is made preferably of metal or ceramic material and features an axial through hole, whose upper part forms a flange 8a.

A second optical focusing group 5, e.g. a lens, is disposed in the upper part of the support 7a.

Means 20 for ejecting washing gas, made according to known techniques, are situated below the second optical focusing group 5.

Three embodiments of the present invention are proposed, obtained by changing the position of the frusto-conical insert 8 inside the through hole 66 of the terminal group K.

According to a fourth embodiment, the terminal group K is formed in such a way that the frusto-conical insert 8 and the nozzle carrier 7 are integral to form one body.

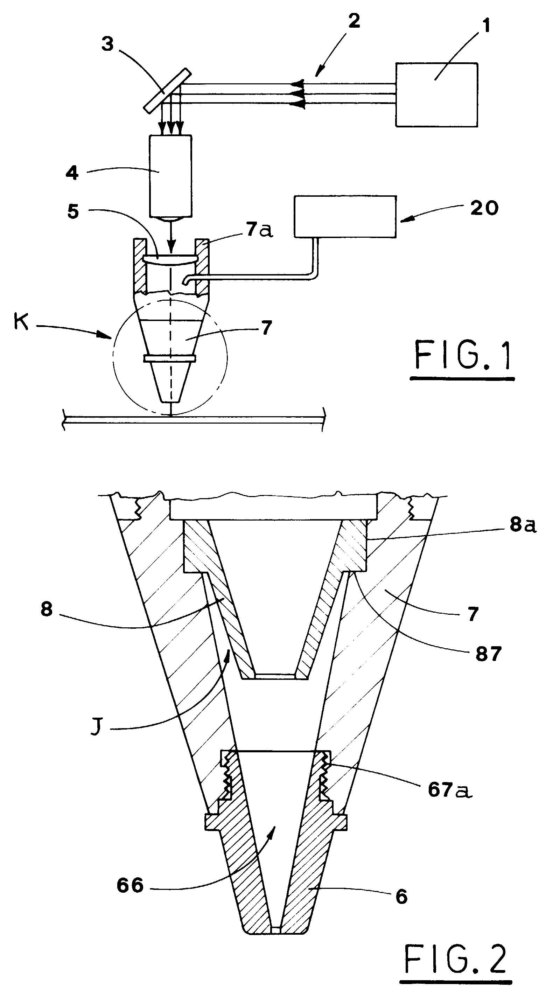

Figure 2 shows a first embodiment, according to which the flange 8a of the frusto-conical insert 8, situated above the nozzle 6, which is e.g. convergent, is interference or slack fitted into the nozzle carrier 7, which is also e.g. convergent, and abuts against a second shoulder 87 made inside the nozzle carrier 7.

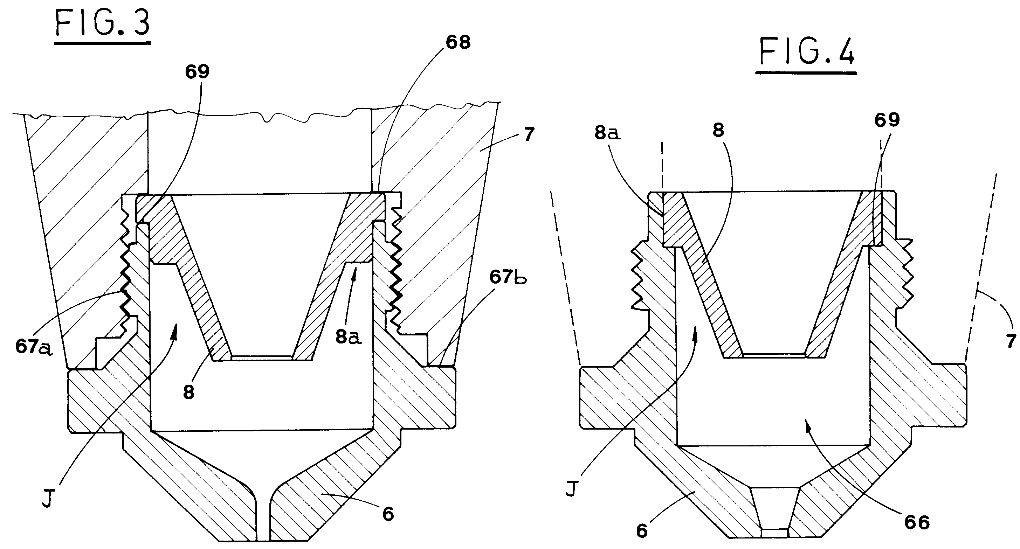

Figure 3 shows a second embodiment, according to which the upper part of the flange 8a of the frusto-conical insert 8 is in abutments on a third shoulder 68, made in the upper part of the nozzle carrier 7.

The lower part of the flange 8a rests on a fourth shoulder 69 made in the upper part of the nozzle 6. In this case, the tip of the nozzle 6 is funnel-shaped.

Temporal removal of the nozzle 6 causes also the removal of the frusto-conical insert 8, which is withdrawn from the terminal group K keeping in touch with the fourth shoulder 69, until it is completely removed.

Figure 4 shows a third embodiment, according to which the frusto-conical insert 8 is interference fitted into the nozzle 6, whose terminal parts have truncated cone sections, and is in abutment against the fourth shoulder 69.

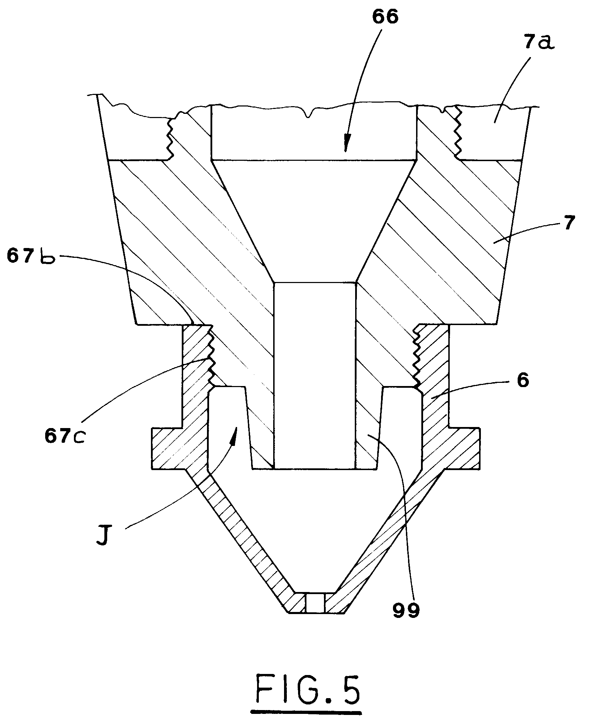

Figure 5 shows a fourth embodiment, according to which the nozzle carrier 7 has substantially frusto-conical cross-section and is screw coupled to the nozzle 6, e.g. by means of a second threading 67c.

At its lower part, the nozzle carrier 7 features a protrusion 99.

In this way the functional tasks of the frusto-conical insert 8 inside the terminal group K are performed instead by the protrusion 99, situated directly below the second threading 67c.

According to these embodiments, the lateral surface of the frusto-conical insert 8, or of the protrusion 99, together with the inner surface of the nozzle carrier 7 (Figure 2), or of the nozzle 6 (Figures 3, 4, and 5), delimit a ring-like hollow space J.

Notwithstanding different positions of the frusto-conical insert 8 inside the through hole 66 of the terminal group K, or particular shapes of the protrusion 99 of the nozzle carrier 7, the above mentioned embodiments use the same operation mode, which, as said before, has the aim of preventing or reducing damages of the lens 5.

During the processing of the metal sheet 10, the laser beam 2 focused by the lens 5 in a particularly reduced spot of this metal sheet, generates local melting of metallic masses, which are removed from the working area by jets of washing gas supplied by the ejection means 20.

However, these ejection means 20, that convey suitable rates of gas flows through the through hole 66 of the terminal group K, cannot prevent melted metallic particles with high temperature from entering into this through hole 66 and likely damaging the lens 5.

The rapidity and entity of damage of the lens 5 due to this fact depends on the reflexivity of the material which the sheet 10 being processed is made of.

The presence of the frusto-conical insert 8 or the protrusion 99 allows to reduce considerably this phenomenon and consequently to reduce the necessity of frequent replacement of this lens 5.

The narrowing of the terminal parts of the frusto-conical insert 8 or the protrusion 99 allows to correspondingly increase the speed of the gas, ejected by the ejection means 20, in the region of the terminal sections and this consequently reduces the flows of metallic masses returning into the through hole 66.

It is also to be remembered that the action performed by this frusto-conical insert 8 or by the protrusion 99 is helped by the presence of the ring-like hollow space J near the terminal sections.

Metallic particles going into the nozzle are generally conveyed to the ring-like hollow space J.

The frusto-conical insert 8 performs its action independently from its position inside the through hole 66 of the terminal group K, as shown in Figures 2, 3 and 4, and the bigger the distance between the terminal section of the nozzle 6 and the frusto-conical insert 8 is, the more efficient the action of the insert results.

The proposed terminal group K guarantees optimal operation of the laser device maintained for long periods, thus reducing the necessity of regular and special maintenance operations and ensuring at the same time considerable throughput and processing efficiency.

Moreover, it is to be pointed out that only a few elements are required for the construction of the above described terminal group K and they are very simple to produce, which results in lower production costs.

For instance, Figure 5 shows an embodiment, according to which the frusto-conical insert 8 is integral with the nozzle carrier 7.

According to still another embodiment, not shown in the drawings, the frusto-conical insert 8 is integral with the nozzle 6.

## Claims

1. Terminal group for laser devices, in particular for cutting metal sheets, the group being connected with a device including a laser rays (1) source, a conveying section (3), a first optical focusing group (4), with said terminal group (K) including a support (7a) for supporting a nozzle carrier (7), a second focusing group (5) situated behind the nozzle carrier (7), and a nozzle (6) fastened to the nozzle carrier (7), the terminal group being characterised in that it includes an insert (8) featuring an axial through hole, situated between the terminal portion of said nozzle (6) and the second focusing group (5), for reducing the cross section through which solid and/or gas particles produced by the laser beam (2) when strikes the metal sheet (10) pass and are thrown toward the second focusing group (5).

2. Terminal group for laser devices, in particular for cutting metal sheets, the group being connected with a device including a laser rays (1) source, a conveying section (3), a first optical focusing group (4), with said terminal group (K) including a support (7a) for supporting a nozzle carrier (7), a second focusing group (5) situated behind the nozzle carrier (7), washing gas ejection means (20) opening into said support (7a), in front of said second focusing group (5), and a nozzle (6) fastened to the nozzle carrier (7), the terminal group being characterised in that it includes an insert (8) featuring an axial through hole and situated between the terminal portion of said nozzle (6) and the second focusing group (5) for reducing the cross section through which solid and/or gas particles produced by the laser beam (2) when strikes the metal sheet (10) pass and are thrown toward the second focusing group (5).

3. Terminal group according to claim 1 or 2, characterised in that it includes a flange (8a) made in the upper part of said frusto-conical insert (8) and designed to fit into said nozzle carrier (7) until it abuts against a shoulder (87) made inside said nozzle carrier (7).

4. Terminal group according to claim 1 or 2, characterised in that it includes a flange (8a) made in the upper part of said frusto-conical insert (8) and designed to abut with its upper part against a shoulder (68) made inside said nozzle carrier (7) and with its lower part, against a shoulder (69) made in the upper part of the nozzle (6), with a slack fit into said nozzle carrier (7).

5. Terminal group according to claim 1 or 2, characterised in that it includes a flange (8a) made in the upper part of said frusto-conical insert (8) and designed to abut against a shoulder (69) made inside said nozzle carrier (7) with an interference fit therein.

6. Terminal group according to claim 3, characterised in that said insert (8) includes a ring-like hollow space (J) formed between the external surface of said frusto-conical insert (8) and the internal surface of said nozzle (6), said ring-like hollow space (J) having the task of receiving said particles produced by the laser beam (2), when it strikes the metal sheet (10), and projected toward this second focusing group (5).

7. Terminal group according to claim 4 or 5, characterised in that said insert (8) includes a ring-like hollow space (J) formed between the external surface of said frusto-conical insert (8) and the internal surface of said nozzle (6), said ring-like hollow space (J) having the task of receiving said particles produced by the laser beam (2), when striking the metal sheet (10), and projected toward the second focusing group (5).

8. Terminal group according to claim 1 or 2 or 6, characterised in that said insert (8) is integral with said nozzle carrier (7).

9. Terminal group according to claim 1 or 2 or 7, characterised in that said insert (8) is integral with said nozzle (6).

10. Terminal group according to any of the previous claims, characterised in that said second focusing group (5) includes a lens.

11. Terminal group according to any of previous claims, characterised in that the through hole of said insert (8) has a conical section converging from said second optical focusing group toward said nozzle (6).
